# EUROPÄISCHE PATENTSCHRIFT

(11) **EP 0 716 908 B1**
(45) Veröffentlichungstag und Bekanntmachung des Hinweises auf die Patenterteilung: **22.03.2000**
(21) Anmeldenummer: 95119298.8
(22) Anmeldetag: 07.12.1995
(51) Int. Cl.: B28B 3/00, B01J 2/00, C04B 35/628, E04F 17/02, C04B 33/02, B28B 1/16

(54) **Verfahren und Vorrichtung zur Herstellung von keramischen Produkten**
Process and apparatus for the production of ceramic products
Procédé et dispositif pour la production de produits céramiques

(30) Priorität: 15.12.1994 DE 4444774
(43) Veröffentlichungstag der Anmeldung: 19.06.1996
(73) Patentinhaber: Strobel, Klaus, Dipl.-Ing., D-95100 Selb (DE)
(72) Erfinder: Strobel, Klaus, Dipl.-Ing., D-95100 Selb (DE)
(74) Vertreter: Preissner, Nicolaus, Dipl.-Ing.

(56) Entgegenhaltungen:
- DE-A- 1 947 099
- DE-A- 2 552 157
- DE-A- 2 829 054
- DE-A- 3 908 172
- DE-A- 4 314 285
- FR-A- 2 509 659
- DATABASE WPI Week 8213 Derwent Publications Ltd., London, GB; AN 82-25742E & SU-A-833 905 (KIEV POLY. ET AL.) , 30.Mai 1981

## Beschreibung

Die Erfindung betrifft ein Verfahren zur Herstellung von keramischen Produkten, insbesondere dünnwandigen Rohren, bei dem in einem Aufbereitungsprozeß eine keramische Formmasse bereitgestellt wird, die aus mindestens einer bildsamen (plastischen) Komponente, insbesondere aus einer tonmineralhaltigen Substanz, und aus mindestens einer unbildsamen (inerten) Komponente, insbesondere einer Schamottsubstanz, besteht, bei dem die keramische Formmasse einer isostatischen Preßvorrichtung zugeführt wird und zu einem Formling verpreßt wird, und bei dem der Formling der Preßvorrichtung entnommen wird und nachfolgend zu dem Fertigprodukt gebrannt wird. Weiterhin betrifft die Erfindung eine Vorrichtung zur Durchführung eines derartigen Verfahrens.

Der Begriff "keramische Formmasse" umschließt alle feinkeramischen und grobkeramischen Formmassen, beispielsweise baukeramische Massen, Feuerfestmassen, Steingut, Steinzeug, Vitreous China, Bone China und Porzellan sowie technische Keramikmassen, insbesondere auf der Basis von Siliciumkarbid, Siliciumnitrit, Aluminiumoxid und dgl.. Vor allem fallen hierunter jedoch auch die besonders preisgünstigen Massen aus den kostengünstigen Rohstoffen Ton und Schamott.

Aufgrund der herausragenden physikalischen und chemischen Eigenschaften keramischer Werkstoffe gegenüber Metallen oder Kunststoffen erschließen sich keramischen Produkten immer neue Anwendungsgebiete, insbesondere in gewissen Anwendungsbereichen bei aggressiven Medien und hohen Temperaturen. Vor allem finden keramische Produkte zunehmend im Bereich der Umwelttechnik, der Abwasser- und der Abgastechnik Verwendung.

Bei der Herstellung keramischer Rohre wird zunächst in einem Aufbereitungsprozeß eine keramische Formmasse bereitgestellt. Eine derartige Formmasse besteht aus mindestens einer bildsamen (plastischen) Komponente, die vor allem für die Festigkeit und die Dichtheit des fertigen Rohres bestimmend ist. Bei keramischen Rohren findet hier insbesondere eine tonmineralhaltige Substanz Verwendung. Weiterhin weist die keramische Formmasse eine unbildsame (inerte) Komponente auf, die für die Feuerfestigkeit, also die Temperaturwechselbeständigkeit, maßgebend ist. In der Praxis kommt hier vor allem eine Schamottsubstanz zum Einsatz. Es ist bekannt, eine derartige keramische Formmasse mit einem isostatischen Preßverfahren zu einem Formling (Grünling) zu verpressen. Eine derartige isostatische Preßvorrichtung ist aus der DE-A-28 25 611 und aus der DE-C-44 07 299 des Anmelders bekannt. Bei derartigen isostatischen Preßvorrichtungen kommt eine elastische Membran zum Einsatz, die beim Preßvorgang durch eine hydraulische Flüssigkeit die keramische Formmasse zu einem Formling formt. Gegenüber statischen Preßvorrichtungen treten bei den isostatischen Preßvorrichtungen keine Dichterunterschiede auf, wodurch das hieraus resultierende Endprodukt sehr gute Eigenschaften, insbesondere bezüglich Festigkeit, Dichtheit und Maßtreue aufweist.

Für die Produkteigenschaften des Fertigproduktes sind Art und Menge der verwendeten Rohstoffe bzw. deren Verhältnis zueinander maßgebend. Wie bereits erwähnt wurde, sind die bildsamen bzw. die unbildsamen Bestandteile der Fertigmasse für bestimmte Eigenschaften des Fertigproduktes bestimmend. In der Praxis hat sich jedoch gezeigt, daß das isostatische Preßverfahren nur bei bestimmten Anteilsverhältnissen der Komponenten der Formmasse möglich ist.

Lagen die prozentualen Anteile der bildsamen (plastischen) Komponente bei > 55% und die Anteile der unbildsamen (inerten) Komponente bei ≤ 45%, so konnten daraus nur sog. plastische Massen erzeugt werden, die ausschließlich auf dem Wege der Extrusion zu einem Rohr geformt werden konnten. Hinsichtlich Geometrie, Maßhaltigkeit und Werkstoffeigenschaften des Fertigproduktes sind derartigen Rohren jedoch enge Grenzen gesetzt.

Sofern die prozentualen Anteile der bildsamen Komponente bei ≤ 35% und die Anteile der unbildsamen Komponente bei ≥ 65% lagen, so konnte entweder das statische, koaxiale Pressen oder das isostatische Pressen durchgeführt werden.

Ausgehend von diesem Stand der Technik liegt der vorliegenden Erfindung die Aufgabe zugrunde, ein Verfahren und eine Vorrichtung vorzuschlagen, mit dem keramische Produkte auf der Basis von isostatisch gepreßten Formlingen herstellbar sind, wobei im wesentlichen keine Beschränkungen der Anteilsverhältnisse zwischen der bildsamen Komponente und der unbildsamen Komponente vorliegen.

Zur Lösung dieser Aufgabe wird ein Verfahren mit den Merkmalen des Patentanspruches 1 vorgeschlagen. Das erfindungsgemäße Verfahren ist dadurch gekennzeichnet, daß der Aufbereitungsprozeß zur Herstellung der keramischen Formmasse nachfolgende Prozeßschritte aufweist:
a) die unbildsame (inerte) Komponente wird einer Verkleinerung unterworfen und liegt feinkörnig mit einem mittleren Partikeldurchmesser d₅₀ von 0,2 bis 0,5 mm vor;
b) die bildsame (plastische) Komponente wird ebenfalls einer Verkleinerung unterworfen und liegt feinkörnig mit einem mittleren Partikeldurchmesser d₅₀ von 1 bis 5µm vor;
c) die unbildsame Komponente wird unter Flüssigkeitszugabe, insbesondere unter Wasserzugabe, gemischt, wobei eine Substanz mit Wasserrückhaltevermögen zugesetzt wird.
d) die bildsame Komponente wird unter intensivem Rühreintrag mit der unbildsamen Komponente vermischt;
e) in einem Umhüllungs- und Granulierprozeß wird die unbildsame Komponente im wesentlichen vollständig mit der bildsamen Komponente überzogen, wobei im Verlauf des Granulierprozesses die Primärkörner in Sekundärkörner mit sphärischer Form überführt werden; und
f) die feuchte Formmasse wird von einer Granulierfeuchte auf eine Preßfeuchte von 4 bis 8% Flüssigkeitsgehalt getrocknet.

Die Erfindung geht von der Erkenntnis aus, daß durch spezielle Aufbereitungsmaßnahmen eine isostatisch verpreßbare Formmasse herstellbar ist, bei der im wesentlichen keine Beschränkung hinsichtlich der Anteilsverhältnisse der unbildsamen und der bildsamen Komponenten vorliegt. Wesentlich ist hierbei, daß zunächst beide Komponenten einer Vorbehandlung unterzogen werden müssen, insbesondere einer Zerkleinerung, damit die nachfolgenden Aufbereitungsschritte durchführbar sind. Darüberhinaus wird zur Anlagerung der bildsamen Komponente an die unbildsame Komponente letztere unter Zugabe von Flüssigkeit, insbesondere Wasser, und einer Substanz mit Wasserrückhaltevermögen gemischt.

In einem sich anschließenden Umhüllungs- und Granulierprozeß wird dann die unbildsame Komponente der Formmasse im wesentlichen vollständig mit der pulverförmigen, bildsamen Komponente überzogen. Hierzu sind gewisse Mengen Granulierflüssigkeit (meist Wasser) erforderlich. Bei dem Umhüllungs- und Granulierprozeß werden im weiteren Granulierprozeß Sekundärkörner mit sphärischer Form erhalten.

Zur Entfernung der für den Umhüllungs- und Granulierprozeß notwendigen Flüssigkeit ist dann eine Rücktrocknung auf eine bestimmte Preßfeuchte erforderlich.

Durch die erfindungsgemäße Verfahrensführung sind keramische Produkte aus isostatisch gepreßten Formlingen herstellbar, bei denen im wesentlichen keine Beschränkungen der Anteilsverhältnisse zwischen der bildsamen und der unbildsamen Komponente vorliegen.

Beispielsweise eignet sich das erfindungsgemäße Verfahren zur Herstellung von keramischen Rohren, Dachziegeln oder Porzellanteilen verschiedenartiger Formgebung.

Vorteilhaft liegt die bildsame Komponente mit einem Anteil von 35% bis 70% und die unbildsame Komponente mit einem Anteil von 65 bis 30% vor. Bisher waren keramische Formmassen mit derartigen Anteilsverhältnissen nicht auf dem Wege des isostatischen Pressens verformbar.

Vorteilhaft wird als Substanz mit Wasserrückhaltevermögen Carboxylmethylcellulose (CMC) zugesetzt. Es können aber auch andere grenzflächenaktive Substanzen mit diesen Eigenschaften eingesetzt werden, die prinzipiell bekannt sind. Insbesondere können grenzflächenaktive Substanzen auf organischer Basis zugegeben werden.

In weiterer Ausgestaltung wird vorgeschlagen, daß die unbildsame und die bildsame Komponente einer Misch- und Granulieranlage zugeführt wird, in der unter Flüssigkeitszugabe die Umhüllung der unbildsamen Komponente mit der bildsamen Komponente stattfindet. Bei dem Umhüllungs -und Granulierprozeß, der unter Flüssigkeitszugabe stattfindet, wird die pulverförmige, bildsame Komponente an die unbildsame Komponente angelagert.

Zweckmäßig beträgt die Misch- und Granulierzeit zwischen 2 bis 8 Minuten.

Vorteilhaft weist die Misch- und Granulieranlage einen Mischerteller und ein Wirblerwerkzeug mit getrennt einstellbaren Drehzahlen auf, wobei die Mischung der unbildsamen Komponenten, möglicher Zusätze grenzflächenaktiver Substanzen, der zugegebenen Flüssigkeit und der bildsamen Komponente bei Wirblerdrehzahlen von 1500 bis 3000 min⁻¹ über eine Zeitdauer von 0.5 bis 1.5 Minuten erfolgt.

Vorteilhaft wird der Granulierprozeß bei Wirblerdrehzahlen von 900 bis 1500 min⁻¹ und Tellerdrehzahlen von 64 min⁻¹ über eine Zeitdauer von 2 bis 6 Minuten durchgeführt.

In Weiterbildung wird vorgeschlagen, daß die bildsamen Komponenten in grubenfeuchter (Feuchte 15 bis 23%), gemischter und vorzuerkleinerter Form mit einem Partikeldurchmesser < 1 mm in die Misch- und Granulieranlage eingebracht werden, wobei vorzugsweise eine Wälzmühle, insbesondere ein Siebkollergang, verwendet wird.

Vorteilhaft wird die nach dem Umhüllungs- und Granulierprozeß vorliegende Formmasse in einem Wirbelbett getrocknet.

In weiterer Ausgestaltung wird vorgeschlagen, daß die Formlinge in einem Einmalschnellbrand bei einer Brenndauer von 4 bis 10 Stunden bei einer Ofentemperatur von 1150 bis 1400 °Celsius gebrannt werden.

Alternativ können die Formlinge in einem konventionellen Brand mit einer Brenndauer von 10 Stunden und einer Ofentemperatur von 1150 bis 1400 °Celsius gebrannt werden.

Weiterhin schlägt die Erfindung eine Vorrichtung zur Durchführung des erfindungsgemäßen Verfahrens vor. Eine derartige Vorrichtung weist eine isostatische Preßvorrichtung auf, in der die keramische Formmasse zu einem Formling gepreßt wird. Eine derartige isostatische Preßvorrichtung ist prinzipiell bekannt und wird in der DE-C-44 07 299 des Anmelders beschrieben, die durch Bezugnahme hiermit zum Inhalt dieser Anmeldung gemacht wird.

Zur Durchführung des Umhüllungs- und Granulierprozesses umfaßt die erfindungsgemäße Vorrichtung eine Misch- und Granulieranlage, die einen rotierenden Mischbehälter mit einem Wirblerwerkzeug enthält, wobei die Drehzahlen des Mischbehälters und des Wirblerwerkzeuges getrennt einstellbar sind. Die erfindungsgemäße Misch- und Granulieranlage basiert auf dem Prinzip des Pelletiertellers. Der Wirbler sorgt für eine hohe Bewegungsintensität des pulverförmigen Bettes und somit für eine intensive Differenzbewegung der am Agglomerationsprozeß teilhabenden Teilchen. In der Einheit mit dem rotierenden Mischbehälter führt die Zusammenlagerung der Rohstoffprimärteilchen bei gleichzeitig abrollender Mischgutbewegung entlang der Mischbehälterwand, der sog. rollenden Agglomeration, zu einem Sekundärkornhaufwerk mit den geforderten Eigenschaften.

Vorteilhaft ist das Wirblerwerkzeug als Sternwirbler ausgebildet.

Zweckmäßig kann als Misch- und Granulieranlage ein Eirich-Mischer eingesetzt werden.

Um die Formmasse von der Granulierfeuchte in die Preßfeuchte rückzutrocknen, ist der Misch- und Granulieranlage ein Trockner, insbesondere ein Wirbelschichttrockner, nachgeschaltet.

In weiterer Ausgestaltung wird vorgeschlagen, daß der Vorrichtung eine Füllvorrichtung zugeordnet ist, die ein angetriebenes Förderelement aufweist, das die granulatförmige Formmasse in einen Füllraum der Preßvorrichtung fördert.

Nachfolgend wird die Erfindung mit Bezug auf die beigefügte Zeichnung näher erläutert. Hierin zeigen:
- Fig. 1: ein Fließbild einer ersten Ausführungsform einer erfindungsgemäßen Vorrichtung;
- Fig. 2: ein Fließbild einer zweiten Ausführungsform einer erfindungsgemäßen Vorrichtung;
- Fig. 3: eine schematische Seitenansicht, teilweise geschnitten, eines nach dem erfindungsgemäßen Verfahren hergestellten Kaminrohres;
- Fig. 4: einen Schnitt längs der Linie IV-IV in Fig. 3;
- Fig. 5: eine weitere Ausführungsform eines nach dem erfindungsgemäßen Verfahren hergestellten Kaminrohres;
- Fig. 6: einen Schnitt längs der Linie VI-VI in Fig. 5;
- Fig. 7: eine weitere Ausführungsform eines nach dem erfindungsgemäßen Verfahren hergestellten Kaminrohres; und
- Fig. 8: einen Schnitt längs der Linie VIII-VIII in Fig. 7.

Bei der Herstellung von keramischen Produkten, insbesondere hohlzylindrischen Rohren, wird zunächst in einem Aufbereitungsprozeß eine keramische Formmasse bereitgestellt, die im wesentlichen eine bildsame (plastische) Komponente und eine unbildsame (inerte) Komponente aufweist. Bei keramischen Rohren, insbesondere Kaminrohren, findet als bildsame Komponente eine tonmineralhaltige Substanz Verwendung. Die bildsame Komponente ist für die Festigkeit und Dichtigkeit des Fertigproduktes maßgebend. Die unbildsame Komponente liegt bei derartigen Produkten als Schamott vor und bestimmt die Feuerfestigkeit, also die Temperaturwechselbeständigkeit des Endproduktes. Somit ist das Verhältnis von bildsamer Komponente zu unbildsamer Komponente in der keramischen Formmasse für die Eigenschaften des Fertigproduktes maßgebend.

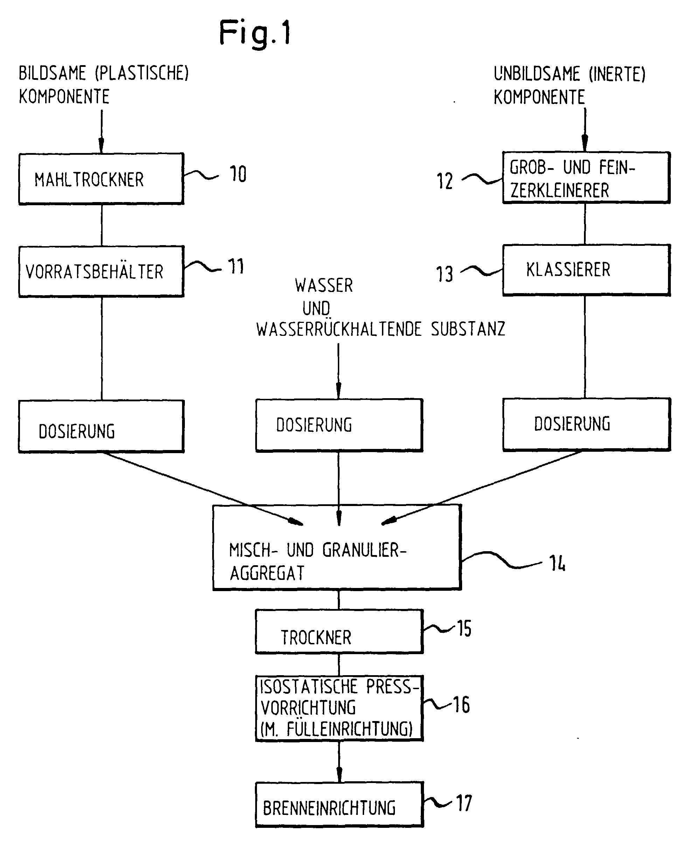

Fig. 1 zeigt ein Fließbild einer ersten Ausführungsform einer erfindungsgemäßen Vorrichtung, mit der eine keramische Formmasse herstellbar ist, die in einem isostatischen Preßverfahren zu einem Formling verpreßt wird. Um das isostatische Verpressen im wesentlichen ohne Begrenzung der prozentualen Anteile der bildsamen (plastischen) Kompenente und der unbildsamen (inerten) Komponente zu ermöglichen, sind spezielle Aufbereitungsschritte notwendig. Darüberhinaus sind für die Eigenschaften des Fertigproduktes auch die stofflichen Eigenschaften der die keramische Formmasse bildenden Komponenten ausschlaggebend.

In keramischer Hinsicht erweisen sich in der Entwicklung und in der Herstellung von Kaminrohren mit hoher Temperaturwechselbeständigkeit Rohstoffe mit folgendem Anforderungsprofil am geeignetsten:
1. Bildsame (plastische) Komponente
Feinkörnige, kaolinitisch-illitsche Steinzeug- oder Bindetone mit niedrigem Anteil an freiem Quarz und organischer Substanz
Richtwerte für den Stoffbestand:
- Chemische Zusammensetzung(Gew.%)

| | |
|---|---|
| Al₂O₃ | 25 - 35 % |
| Fe₂O₃ | <4 % |
| TiO₂ | <3 % |
| CaO | 0,2-0,5% |
| MgO | 0,3-0,8% |
| K₂O | 2,5-5,5% |
| Glühverlust (1000°C) | 6-11 % |

- Mineralbestand (Gew.%)

| | |
|---|---|
| Kaolinit | 30 - 60 % |
| Illit/Smektit | 20 - 50 % |
| Quarz | <15% |
| organische Substanzen | <1% |

- Kornverteilung

| | |
|---|---|
| Siebrückstand >0,200 mm | max. 2 % |
| Siebrückstand >0,063 mm | max. 5 % |
| Anteil > 2 µm | 60 - 80 % |

Hierbei sollte die Dichtbrandtemperatur im Bereich von SK 4a bis 5a (SK = Segerkegel) liegen. Im Dehnungs-Schwindungsverhalten sind den hohen Anforderungen an die Temperaturwechselbeständigkeit des zu produzierenden Bauteils entsprechend Rohstoffe mit niedrigem Wärmeausdehnungskoeffizienten von Vorteil.
Richtwerte für die Mahlfeinheit:
- Kornanteilgröße > 1 mm ----
- Kornanteil 0.09 - 1 mm 5 - 15 %

Die Restfeuchte der bildsamen Komponente sollte zwischen 2 bis 4% liegen.
2. Unbildsame (inerte) Komponente
Hochgebrannte mullitreiche Ton- oder Kaolinschamotten mit möglichst niedrigem Anteil an freiem Quarz (< 5%) und frei von Cristobalit
- Physikalische Kennwerte

| | |
|---|---|
| Wasseraufnahme | < 4% |
| Dichte | > 2,3 g/cm³ |

- Körnungen
0 - 1,6 mm
0 - 1,0 mm
0 - 0,8 mm
0 - 0,5 mm

Weitere, die Temperaturwechselbeständigkeit und Dichtheit des Bauteils begünstigende Rohstoffe bzw. NA-Abfallprodukte werden in Mengen zwischen 3 % und 18 % in den Masseversatz eingeführt:
Cordierit bzw. Cordieritbruch
SiC bzw. SiC-Bruch
Speckstein/Talkum
Gläser bzw. glasbildende Stoffe

Wie aus Fig. 1 hervorgeht, wird die bildsame Komponente zunächst einem Mahltrockener 10 zugeführt, um danach als pulverförmige, feinkörnige Substanz in einem Vorratsbehälter 11 gespeichert zu werden. Nach diesem Zerkleinerungsschritt liegt die bildsame Komponente mit einem mittleren Durchmesser d₅₀ von 1 bis 5 µm vor.

In ähnlicher Weise wird die unbildsame Komponente einem Grob- und Feinzerkleinerer 12 zugeführt. Der Grobanteil wird in einem Klassierer 13 abgeschieden. Danach liegt die unbildsame Komponente mit einem mittleren Partikeldurchmesser d₅₀ von 0,2 bis 0,5 mm vor.

Bei dem in Fig. 1 dargestellten Verfahren wird die unbildsame Komponente zunächst in einem Misch- und Granulieraggregat 14 vorgelegt. Das Misch- und Granulieraggregat 14 weist einen rotierenden Mischbehälter und ein rotierendes Wirblerwerkzeug auf, das als Stirnwirbler ausgebildet ist. Der Stirnwirbler ist je nach Anwendungszweck mit stumpfen oder messerartigen Schlagleisten ausgerüstet, die auch in ihrer Anordnung und Anzahl variieren können. Die Drehzahlen des Mischbehälters und des Wirblers sind getrennt voneinander einstellbar.

In dem Misch- und Granulieraggregat 14 wird die vorgelegte unbildsame Komponente in einem Umhüllungs- und Granulierprozeß mit der bildsamen Komponente zusammengeführt. Zunächst wird zu der in dem Misch- und Granulieraggregat 14 vorgelegten unbildsamen Komponente Wasser und als Substanz mit Wasserrückhaltevermögen Carboxylmethylcellulose (CMC) zugesetzt. Die für den Umhüllungs- und Granulierprozeß notwendige Flüssigkeit bewegt sich - je nach Massezusammensetzung und gewünschter Sekundärkorngröße - zwischen 9 und 15% bezogen auf das Trockengewicht.

Nach der Zugabe der Flüssigkeit und der grenzflächenaktiven Substanz wird die in Pulverform vorliegende bildsame Komponente zudosiert.

Die Verfahrensbedingungen in dem Misch- und Granulieraggregat 14 gehen aus der nachfolgenden Tabelle hervor:

| | Bearbeitungsdauer (Minuten) | Arbeitsgeschwindigkeit (min⁻¹) | |
|---|---|---|---|
| | | Wirbler | Teller |
| a) 40 ± 10 % Hartstoffe | TMZ: 1 ± 0,5 | 900 | 32 |
| b) 0,5 ± 0,4 % GFA Substanz | TMZ: 1 ± 0,5 | 900 | 32 |
| c) 13 ± 2 % Wasser | NMZ: 1 ± 0,5 | 900 | 32 |
| d) 60 ± 10 % bildsame Rohstoffe | MZ: 1 ± 0,5 | 1500-3000 | 64 |
| | | | |
| | GZ: 4 ± 2 | 900-1500 | 64 |
| TMZ = Trockenmischzeit, NMZ = Naßmischzeit MZ = Mischzeit, GZ = Granulierzeit | | | |
| Granulierfeuchte = 11,5 ± 2 % Rücktrocknung auf Preßfeuchte = 6 ± 2 % | | | |

In einem derartigen Misch- und Granulieraggregat 14 sorgt der Wirbler für eine hohe Bewegungsintensität des pulverförmigen Rohstoffbettes und somit für eine intensive Differenzbewegung der am Agglomerationsprozeß teilhabenden Partikel. Zusammen mit dem rotierenden Mischbehälter führt die Zusammenlagerung der eingebrachten Komponenten bei gleichzeitig abrollender Mischgutbewegung entlang der Mischbehälterwand, der sog. rollenden Agglomeration oder Granulation, zu einem Sekundärkornhaufwerk mit den geforderten Eigenschaften.

Sofern keine grenzflächenaktive Substanz bei dem Umhüllungs- und Granulierprozeß eingesetzt werden soll, empfiehlt sich eine Verfahrensführung gemäß nachfolgender Tabelle:

| | Bearbeitungsdauer (Minuten) | Arbeitsgeschwindigkeit (min⁻¹) | |
|---|---|---|---|
| | | Wirbler | Teller |
| a) 40 ± 10 % Hartstoffe | TMZ: 1 ± 0,5 | 900 | 32 |
| b) 13 ± 2 % GFA Substanz | TMZ: 1 ± 0,5 | 900 | 32 |
| c) 13 ± 2 % bildsame Rohstoffe | MZ: 1 ± 0,5 | 900 | 32 |
| d) 47 ± 2 % bildsame Rohstoffe | MZ: 1 ± 0,5 | 1500-3000 | 64 |
| | | | |
| | GZ: 4 ± 2 | 900-1500 | 64 |
| TMZ = Trockenmischzeit, NMZ = Naßmischzeit MZ = Mischzeit, GZ = Granulierzeit | | | |
| Granulierfeuchte = 11,5 ± 2 % Rücktrocknung auf Preßfeuchte = 6 ± 2 % | | | |

Dem Misch- und Granulieraggregat 14 ist ein Trockner 15 nachgeschaltet, wobei insbesondere ein Wirbelbetttrockner vorgesehen ist. In dem Trockner 15 wird die keramische Formmasse auf eine Preßfeuchte zurückgetrocknet, wobei die für den Umhüllungs- und Granulierprozeß erforderliche Flüssigkeit im wesentlichen entfernt wird.

Dem Trockner 15 ist eine isostatische Preßvorrichtung 16 mit einer Fülleinrichtung nachgeschaltet. Eine derartige isostatische Preßvorrichtung 16 ist bekannt und wird in der deutschen Patentanmeldung P 44 07 299 des gleichen Anmelders beschrieben, die durch Bezugnahme hiermit zum Inhalt der vorliegenden Anmeldung gemacht wird. Der Preßvorrichtung 16 ist eine Füllvorrichtung zugeordnet, die ein angetriebenes Förderelement aufweist, das die granulatförmige Formmasse in einen Füllraum der isostatischen Preßvorrichtung 16 fördert.

Nach dem isostatischen Pressen des Formlings wird dieser einer Brenneinrichtung 17 zugeführt. Die Formlinge können in einem Einmalschnellbrand bei einer Brenndauer von 4 bis 10 Stunden und einer Ofentemperatur von 1150 bis 1400 °Celsius gebrannt werden. Alternativ ist auch ein konventioneller Brand der Formlinge bei einer Brenndauer von 10 Stunden und einer Ofentemperatur von 1150 bis 1400°Celsius möglich.

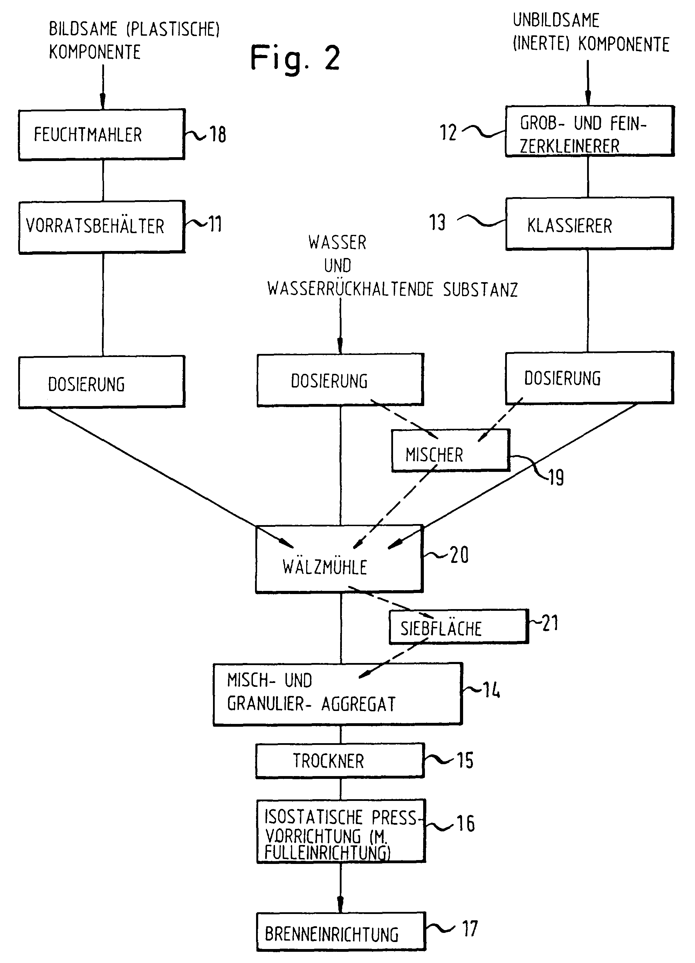

Fig. 2 zeigt eine weitere Ausführungsform einer erfindungsgemäßen Vorrichtung. Zur Beschreibung von Fig. 2 werden für gleiche oder funktionsgleiche Teile die in Fig. 1 bereits eingeführten Bezugszeichen verwendet.

Bei dem Verfahren gemäß Fig. 2 liegt die bildsame Komponente zum größen Teil in grubenfeuchtgemischter und vorzerkleinerter Form (Partikeldurchmesser < 1 mm) vor. Die Feuchte der bildsamen Komponente liegt zwischen 15 - 23%.

Die bildsame Komponente wird in einem Feuchtmahler 18 zerkleinert und anschließend einem Vorratsbehälter 11 zugeführt. Die unbildsame Komponente wird in einem Grob- und Feinzerkleinerer 12 zerkleinert, wobei anschließend der Grobanteil in einem Klasierer 13 abgeschieden wird.

Bei dem dargestellten Verfahren kommt eine Wälzmühle 20 in der Art einer Kollerganges zum Einsatz, die neben einer geschlossenen Bodenkonstruktion (Mahlbahn) auch eine Siebfläche 21 enthält. In dieser Wälzmühle 20 werden die zudosierten Komponenten unter Zudosierung von Wasser und ggf. grenzflächenaktiven Substanzen einem intensiven Misch-, Quetsch- und Kompaktierungsvorgang und letztendlich einer gewissen Vorgranulierung unterworfen. Anschließend wird die Masse dem nachgeschalteten Misch- und Granulieraggregat 14 zugeführt, das bereits im Zusammenhang mit Fig. 1 beschrieben wurde. Die sich anschließenden Verfahrensschritte und Anlagenkomponenten entsprechen dem in Fig. 1 beschriebenen Verfahren.

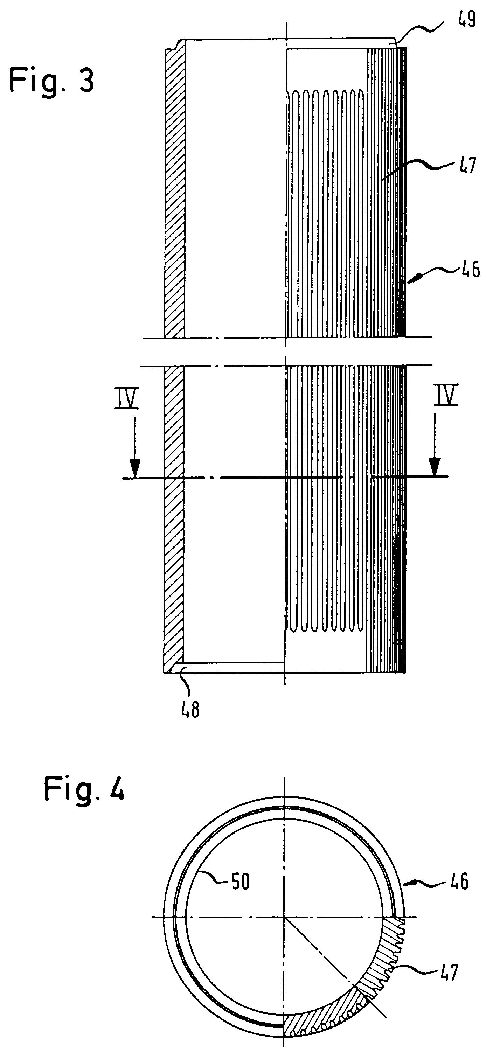

In den Fig. 3 bis 8 sind verschiedene Ausführungsformen von Kaminrohren dargestellt, die nach dem erfindungsgemäßen Verfahren und unter Verwendung der erfindungsgemäßen Vorrichtung hergestellt wurden.

In den Fig. 3 und 4 ist ein universelles Kaminrohr 46 dargestellt, dessen Außenseite mit einer Rippenstruktur 47 versehen ist. Wie aus Fig. 4 hervorgeht, ist eine Innenwand 50 glatt ausgebildet. Endseitig ist das Kaminrohr 46 einerseits mit einer Nut 48 und andererseits mit einer Feder 49 versehen, um die Verbindung zu gleichartig gestalteten Kaminrohren zu ermöglichen.

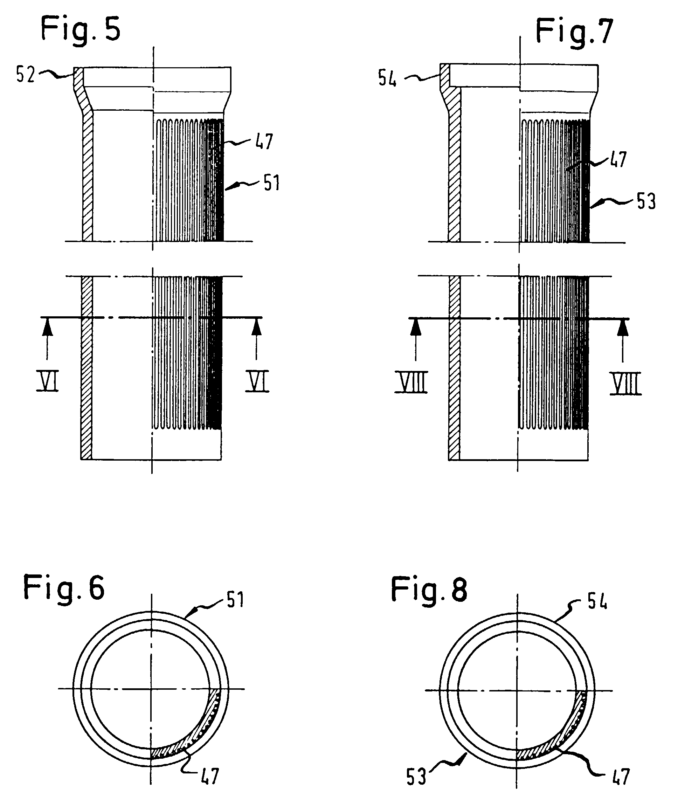

Fig. 5 und 6 zeigt ein Kaminrohr 51, das lediglich eine Wandstärke von 2 bis 5 mm aufweist. Endseitig ist eine Muffe 52 vorgesehen, die ggf. mit einem Gewinde versehen werden kann. Ein derartiges Rohr kann als Substitutionsprodukt für Kunststoffrohre dienen, insbesondere bei Abgasleitungen von Brennwertgeräten, also extrem feuchten Schornsteinanlagen.

In den Fig. 7 und 8 ist ein Steinzeugrohr 53 gezeigt, das einen lichten Durchmesser von 100 bis 1200 mm aufweisen kann. Endseitig ist das Steinzeugrohr 53 mit einer Muffe 54 versehen. Dieses Rohr weist eine sehr hohe Festigkeit auf und kann darüberhinaus die an die Dichtheit gestellten Anforderungen erfüllen.

Hinsichtlich der in den Fig. 3 bis 8 dargestellten Rohre ist zusammenfassend anzumerken, daß die erfindungsgemäße Verfahrensführung zu qualitativ sehr hochwertigen Rohren führt. Insbesondere können die an die Maßhaltigkeit, beispielsweise Länge oder Dünnwandigkeit gestellten Anforderungen durch die Anwendung des isostatischen Preßverfahrens erfüllt werden. Die Anforderungen an die Festigkeit und die Dichtheit des Endproduktes bzw. an die Feuerfestigkeit können durch das gewählte Verhältnis der bildsamen Komponente zu der unbildsamen Komponente erfüllt werden. Hierbei ermöglicht das erfindungsgemäße Verfahren, insbesondere der Umhüllungs- und Granulierprozeß, ein weites Spektrum von Variationsmöglichkeiten, um den jeweiligen Anforderungen im Einzelfall gerecht zu werden.

## Patentansprüche

1. Verfahren zur Herstellung von keramischen Produkten, insbesondere dünnwandigen Rohren, bei dem in einem Aufbereitungsprozeß eine keramische Formmasse bereitgestellt wird, die aus mindestens einer bildsamen (plastischen) Komponente, insbesondere aus einer tonmineralhaltigen Substanz, und aus mindestens einer unbildsamen (inerten) Komponente, insbesondere einer Schamottsubstanz, besteht, bei dem die keramische Formmasse einer isostatischen Preßvorrichtung zugeführt wird und zu einem Formling verpreßt wird, und bei dem der Formling der Preßvorrichtung entnommen wird und nachfolgend zu dem Fertigprodukt gebrannt wird, dadurch gekennzeichnet, daß der Aufbereitungsprozeß zur Herstellung der keramischen Formmasse nachfolgende Prozeßschritte aufweist:
a) die unbildsame (inerte) Komponente wird einer Zerkleinerung unterworfen und liegt feinkörnig mit einem mittleren Partikeldurchmesser d₅₀ von 0,2 bis 0,5 mm vor;
b) die bildsame (plastische) Komponente wird ebenfalls einer Zerkleinerung unterworfen und liegt feinkörnig mit einem mittleren Partikeldurchmesser d₅₀ von 1 bis 5 µm vor;
c) die unbildsame Komponente wird unter Flüssigkeitszugabe, insbesondere unter Wasserzugabe, gemischt, wobei eine Substanz mit Wasserrückhaltevermögen zugesetzt wird.
d) die bildsame Komponente wird unter intensivem Rühreintrag mit der unbildsamen Komponente vermischt;
e) in einem Umhüllungs- und Granulierprozeß wird die unbildsame Komponente im wesentlichen vollständig mit der bildsamen Komponente überzogen, wobei im Verlauf des Granulierprozesses die Primärkörner in Sekundärkörner mit sphärischer Form überführt werden; und
f) die feuchte Formmasse wird von einer Granulierfeuchte auf eine Preßfeuchte von 4 bis 8% Flüssigkeitsgehalt getrocknet.

2. Verfahren nach Anspruch 1, dadurch gekennzeichnet, daß die bildsame Komponente mit einem Anteil von 35% bis 70% und die unbildsame Komponente mit einem Anteil von 65 bis 30% vorliegt.

3. Verfahren nach Anspruch 1 oder 2, dadurch gekennzeichnet, daß als Substanz mit Wasserrückhaltevermögen Carboxylmethylcellulose (CMC) zugesetzt wird.

4. Verfahren nach einem der Ansprüche 1 bis 3, dadurch gekennzeichnet, daß die unbildsame und die bildsame Komponente einer Misch- und Granulieranlage zugeführt wird, in der unter Flüssigkeitszugabe die Umhüllung der unbildsamen Komponente mit der bildsamen Komponente stattfindet.

5. Verfahren nach Anspruch 4, dadurch gekennzeichnet, daß die Misch- und Granulierzeit zwischen 2 bis 8 Minuten beträgt.

6. Verfahren nach Anspruch 4 oder 5, dadurch gekennzeichnet, daß die Misch- und Granulieranlage einen Mischerteller und ein Wirblerwerkzeug mit getrennt einstellbaren Drehzahlen aufweist, wobei die Mischung der unbildsamen Komponenten, möglicher Zusätze grenzflächenaktiver Substanzen, der zugegebenen Flüssigkeit und der bildsamen Komponente bei Wirblerdrehzahlen von 1500 bis 300 min⁻¹ über eine Zeitdauer von 0.5 bis 1.5 Minuten erfolgt.

7. Verfahren nach Anspruch 6, dadurch gekennzeichnet, daß der Granulierprozeß bei Wirblerdrehzahlen von 900 bis 1500 min⁻¹ und Tellerdrehzahlen von 64 min⁻¹ über eine Zeitdauer von 2 bis 6 Minuten durchgeführt wird.

8. Verfahren nach einem der Ansprüche 1 bis 7, dadurch gekennzeichnet, daß die bildsame Komponente in grubenfeuchter (Feuchte 15-23%) gemischter und vorzerkleinerter Form mit einem Partikeldurchmesser < 1 mm in die Misch- und Granulieranlage eingebracht wird, wobei vorzugsweise eine Wälzmühle, insbesondere ein Siebkollergang, verwendet wird.

9. Verfahren nach einem der Ansprüche 1 bis 8, dadurch gekennzeichnet, daß die nach dem Umhülllungs- und Granulierprozeß vorliegende Formmasse in einem Wirbelbett getrocknet wird.

10. Verfahren nach einem der Ansprüche 1 bis 9, dadurch gekennzeichnet, daß die Formlinge in einem Einmalschnellbrand bei einer Brenndauer von 4 bis 10 Stunden bei einer Ofentemperatur von 1150 bis 1400 °C gebrannt werden.

11. Verfahren nach einem der Ansprüche 1 bis 9, dadurch gekennzeichnet, daß die Formlinge in einem konventionellen Brand mit einer Brenndauer von 10 Stunden und einer Ofentemperatur von 1150 bis 1400 °C gebrannt werden.

12. Vorrichtung zur Durchführung des Verfahrens nach einem der Ansprüche 1 bis 11, mit einer isostatischen Preßvorrichtung (16), in der die keramische Formmasse zu einem Formling gepreßt wird, und mit einer Brenneinrichtung (17), in der der Formling gebrannt wird, dadurch gekennzeichnet, daß zur Aufbereitung der keramischen Formmasse eine Misch- und Granulieranlage (14) vorgesehen ist, die einen rotierenden Mischbehälter mit einem Wirblerwerkzeug enthält, wobei die Drehzahlen des Mischbehälters und des Wirblerwerkzeuges getrennt einstellbar sind.

13. Vorrichtung nach Anspruch 12, dadurch gekennzeichnet, daß das Wirblerwerkzeug als Stirnwirbler ausgebildet ist.

14. Vorrichtung nach Anspruch 12, dadurch gekennzeichnet, daß als Misch-und Granulieranlage (14) ein Eirich-Mischer eingesetzt wird.

15. Vorrichtung nach einem der Ansprüche 12 bis 14, dadurch gekennzeichnet, daß der Misch- und Granulieranlage (14) ein Trockner (15), insbesondere ein Wirbelschichttrockner, nachgeschaltet ist.

16. Vorrichtung nach einem der Ansprüche 12 bis 15, dadurch gekennzeichnet, daß der Preßvorrichtung (16) eine Fülleinrichtung zugeordnet ist, die ein angetriebenes Förderelement aufweist, das die granulatförmige Formmasse in einen Füllraum der Preßvorrichtung (16) fördert.

17. Kaminrohr, hergestellt mit einem Verfahren nach einem der Ansprüche 1 bis 11 und/oder mit einer Vorrichtung nach einem der Ansprüche 12 bis 16, mit einem dünnwandigen hohlzylindrischen Rohrkörper, der an seiner Außenseite eine Struktur (47) mit in Längsrichtung des Rohrkörpers verlaufenden Rippen aufweist und an den Stirnenden mit eingeformten Verbindungselementen versehen ist.

18. Kaminrohr nach Anspruch 17, dadurch gekennzeichnet, daß der Rohrkörper eine Wandstärke von 2 bis 5 mm aufweist.

## Claims

1. A method for the production of ceramic products, more particularly thin-walled pipes, including a compounding process to furnish a ceramic molding compound comprising at least one plastic component, more particularly a clay mineral substance and at least one inert component, more particularly a fireclay substance, feeding the ceramic molding compound to an isostatic compactor, compacting the molding compound into a compact, removing the compact from the compactor and subsequently firing the compact into the finished product, characterized in that said compounding process for producing said ceramic molding compound comprises the following steps in the process:
a) size-reducing the inert component to a fine-grain component having a mean particle diameter d₅₀ of 0.2 to 0.5 mm;
b) size-reducing the plastic component to a fine-grain component having a mean particle diameter d₅₀ of 1 to 5 µm;
c) mixing the inert component with the addition of a liquid, more particularly water, and admixing a substance having a water retention capacity;
d) mixing the plastic component with the inert component with intensive agitation;
e) coating the inert component substantially completely with the plastic component in a coating and granulating process, the primary grains being transposed into spherical secondary grains in the course of granulation; and
f) drying the moist molding compound from a granulate moisture content to a compact moisture content of 4 to 8% liquid content.

2. The method as set forth in claim 1, characterized in that said plastic component exists in a proportion of 35 % to 70 % and said inert component in a proportion of 65 to 30 %.

3. The method as set forth in claim 1 or 2, characterized in that carboxylmethyl cellulose (CMC) is admixed as said substance having a water retention capacity.

4. The method as set forth in any of the claims 1 to 3, characterized in that said inert component and plastic component are introduced into a mixer/granulating unit in which with the addition of a liquid said inert component is coated with said plastic component.

5. The method as set forth in claim 4, characterized in that the mixer/granulating time is in the range 2 to 8 minutes.

6. The method as set forth in claim 4 or 5, characterized in that said mixer/granulating unit comprises a mixing plate and an swirler tool, the rotative speed of which can be set individually, mixing said inert component, any additives, surfactants, said added liquid and said plastic component being done at swirling speeds in the range 1,500 to 3,000 rpm for a time duration of 0.5 to 1. 5 minutes.

7. The method as set forth in claim 6, characterized in that granulation is implemented at swirling speeds in the range 900 to 1,500 rpm and plate speeds of 64 rpm for a time duration of 2 to 6 minutes.

8. The method as set forth in any of the claims 1 to 7, characterized in that said plastic component is introduced into said mixer/granulating unit in a pit-wet (15 to 23 % moisture content) form, mixed and already reduced in size with a particle diameter < 1mm, a roller mill, more particularly an edge runner dry mill being used for this purpose.

9. The method as set forth in any of the claims 1 to 8, characterized in that said molding compound materializing from said coating and granulating process is dried in a fluidized bed.

10. The method as set forth in any of the claims 1 to 9, characterized in that said compacts are once-fired 4 to 10 hours at a furnace temperature of 1,150 to 1,400 °C.

11. The method as set forth in any of the claims 1 to 9, characterized in that said compacts are fired in a conventional furnace for 10 hours at a furnace temperature in the range 1,150 to 1,400 °C.

12. An apparatus for implementing the method as set forth in any of the claims 1 to 11 comprising an isostatic compactor (16) in which said ceramic molding compound is compacted into a compact and a firing means (17) in which said compact is fired, characterized in that for compounding said ceramic molding compound a mixer/granulating unit (14) is provided, including a rotary mixing vessel and a swirler tool, the rotary speeds of said mixing vessel and said swirler tool being separately adjustable.

13. The apparatus as set forth in claim 12, characterized in that said swirler tool is configured as a star-shaped swirler.

14. The apparatus as set forth in claim 12, characterized in that an Eirich mixer is put to use as said mixer/granulating unit (14).

15. The apparatus as set forth in any of the claims 12 to 14, characterized in that said mixer/granulating unit (14) is followed by a dryer (15), more particularly a fluidized bed dryer.

16. The apparatus as set forth in any of the claims 12 to 15, characterized in that said compactor (16) is assigned a filler device comprising a powered conveying element which conveys said molding compound granulate into a filler space of said compactor (16).

17. A chimney stack produced by a method as set forth in any of the claims 1 to 11 and/or with an apparatus as set forth in any of the claims 12 to 16 including a thin-walled tubular body comprising at its outer surface a structure (47) with ribs oriented in the longitudinal direction of said tubular body and provided at the ends with molded connected elements.

18. The chimney stack as set forth in claim 17, characterized in that said tubular body comprises a wall thickness of 2 to 5 mm.

## Revendications

1. Procédé pour la production de produits céramiques, en particulier des tubes à paroi mince, dans lequel on prépare pendant un processus de préparation une masse céramique à mouler, constituée par au moins une composante malléable (plastique), en particulier une substance minérale contenant de l'argile, et par au moins une composante non malléable (inerte), en particulier une substance à base de chamotte, dans lequel la masse céramique à mouler est amenée à un dispositif de pressage isostatique et pressée pour donner une ébauche, et dans lequel l'ébauche est enlevée du dispositif de pressage et ensuite cuite pour réaliser le produit fini,
caractérisé en ce que le processus de préparation pour produire la masse céramique à mouler comprend les opérations suivantes :
a) la composante non malléable (inerte) est soumise à un broyage et se présente sous forme de grains fins avec un diamètre de particules moyen d₅₀ compris entre 0,2 et 0,5 mm ;
b) la composante malléable (plastique) est également soumise à un broyage et se présente sous forme de grains fins avec un diamètre de particules moyen d₅₀ compris entre 1 et 5 microns ;
c) la composante non malléable est mélangée avec addition de liquide, en particulier avec addition d'eau, et avec addition d'une substance présentant des propriétés de rétention d'eau ;
d) la composante malléable est mélangée avec la composante non malléable, avec application d'un remuage intense ;
e) dans un processus d'enrobage et de granulation, la composante non malléable est sensiblement totalement revêtue de la composante malléable, et au cours du processus de granulation les grains primaires sont transformés en grains secondaires de forme sphérique ; et
f) la masse à mouler humide est séchée depuis une humidité de granulation jusqu'à une humidité de pressage avec une teneur en liquide de 4 à 8%.

2. Procédé selon la revendication 1, caractérisé en ce que la composante malléable est présente en proportion de 35 à 70%, et la composante non malléable en proportion de 65 à 30%.

3. Procédé selon l'une ou l'autre des revendications 1 et 2, caractérisé en ce que l'on ajoute du carboxyl-méthyl-cellulose (CMC) à titre de substance présentant des propriétés de rétention d'eau.

4. Procédé selon l'une des revendications 1 à 3, caractérisé en ce que la composante non malléable et la composante malléable sont amenées à une installation de mélange et de granulation, dans laquelle se produit, avec addition de liquide, l'enrobage de la composante non malléable par la composante malléable.

5. Procédé selon la revendication 4, caractérisé en ce que le temps de mélange et de granulation est compris entre 2 et 8 minutes.

6. Procédé selon l'une ou l'autre des revendications 4 et 5, caractérisé en ce que l'installation de mélange et de granulation comprend un plateau de mélangeur et un outil agitateur avec des vitesses de rotation séparément réglables, le mélange de la composante non malléable, des additifs éventuels de substances tensioactives, du liquide ajouté, et de la composante malléable, a lieu avec des vitesses de rotation de l'agitateur entre 1500 et 300 min⁻¹ pendant une durée de 0,5 à 1,5 minutes.

7. Procédé, selon la revendication 6, caractérisé en ce que le processus de granulation est exécuté avec des vitesses de rotation de l'agitateur entre 900 et 1500 min⁻¹ et des vitesses de rotation du plateau de 64 min⁻¹, pendant une durée de 2 à 6 minutes.

8. Procédé selon l'une des revendications 1 à 7, caractérisé en ce que la composante malléable est introduite sous forme humide (humidité entre 15 et 23%), mélangée et préalablement broyée avec un diamètre de particules < 1 mm dans l'installation de mélange et de granulation, et en ce que l'on utilise de préférence un broyeur à cylindres, en particulier un broyeur à meules perforé.

9. Procédé selon l'une des revendications 1 à 8, caractérisé en ce que la masse à mouler provenant du processus d'enrobage et de granulation est séchée dans un lit fluidisé.

10. Procédé selon l'une des revendications 1 à 9, caractérisé en ce que les ébauches sont cuites dans un four de monocuisson rapide pendant une durée de cuisson de 4 à 10 heures et sous une température de four de 1150 à 1400°C.

11. Procédé selon l'une des revendications 1 à 9, caractérisé en ce que les ébauches sont cuites dans un four traditionnel pendant une durée de cuisson de 10 heures et sous une température de four de 1150 à 1400°C.

12. Dispositif pour la mise en oeuvre du procédé selon l'une des revendications 1 à 11, comprenant un dispositif de pressage isostatique (16), dans lequel la masse céramique à mouler est pressée pour donner une ébauche, et comprenant un dispositif de cuisson (17), dans lequel l'ébauche est cuite, caractérisé en ce que, pour la préparation de la masse céramique à mouler, il est prévu une installation de mélange et de granulation (14), laquelle comprend un récipient de mélange en rotation et un outil agitateur, les vitesses de rotation du récipient de mélange et de l'outil agitateur étant séparément réglables.

13. Dispositif selon la revendication 12, caractérisé en ce que de l'outil agitateur est réalisé sous forme d'agitateur en étoile.

14. Dispositif selon la revendication 12, caractérisé en ce que l'on emploie un mélangeur de Eirich à titre d'installation de mélange et de granulation (14).

15. Dispositif selon l'une des revendications 12 à 14, caractérisé en ce qu'un sécheur (15), en particulier un sécheur à lit fluidisé, est disposé en aval de l'installation de mélange et de granulation (14).

16. Dispositif selon l'une des revendications 12 à 15, caractérisé en ce qu'un dispositif de remplissage est associé au dispositif de pressage (16), ce dispositif de remplissage comprenant un élément convoyeur motorisé qui amène la masse à mouler sous forme de granulés jusque dans une chambre de remplissage du dispositif de pressage (16).

17. Tube de cheminée, produit suivant un procédé selon l'une des revendications 1 à 11 et/ou avec un dispositif selon l'une des revendications 12 à 16, présentant un corps tubulaire cylindrique creux à paroi mince, qui présente à sa face extérieure une structure (47) avec des nervures s'étendant en direction longitudinale du corps tubulaire, et pourvu d'éléments de jonction moulés aux extrémités frontales.

18. Tube de cheminée selon la revendication 17, caractérisé en ce que le corps tubulaire présente une épaisseur de paroi de 2 à 5 mm.
